# EUROPEAN PATENT APPLICATION

(11) **EP 1 860 872 A2**
(43) Date of publication of application: **28.11.2007**
(21) Application number: 06026963.6
(22) Date of filing: 27.12.2006
(51) Int. Cl.: H04N 5/44

(54) **Video processing system that generates sub-frame metadata**

(30) Priority: 22.05.2006 US 802423 P; 23.06.2006 US 474032
(71) Applicant: Broadcom Corporation, Irvine, CA 92617 (US)
(72) Inventor: Bennett, James D., 92672 San Clemente, CA (US)
(74) Representative: Jehle, Volker Armin

(57) **Abstract**

A video processing device that generates sub-frame metadata for use in modifying a sequence of original video frames includes a video interface for receiving video data representing the sequence of original video frames, a user interface for receiving as user input sub-frame information identifying a sub-frame corresponding to a region of interest within a scene depicted in at least one frame of the sequence of original video frames and processing circuitry for generating the sub-frame metadata from the sub-frame information. Editing information associated with each sub-frame may also be included in the sub-frame metadata. Targeted sub-frame metadata can be specifically generated for use with a particular screen or screen size. A first player with a small screen and a second player with a larger screen may each receive different sub-frame metadata files, while both receive the same original video. Pursuant to the differing sub-frame metadata, the original video will be displayed in two different forms on the small and larger screens.

## Description

### CROSS REFERENCE TO RELATED PATENTS

This U.S. application for patent claims the benefit of the filing date of U.S. Provisional Patent Application entitled, VIDEO PROCESSING DEVICE AND METHOD FOR GENERATING SUB-FRAME METADATA, Attorney Docket No. BP5273, having Serial No. 60/802,423, filed on May 22, 2006, which is incorporated herein by reference for all purposes.

### STATEMENT REGARDING FEDERALLY SPONSORED RESEARCH OR DEVELOPMENT - NOT APPLICABLE

### INCORPORATION-BY-REFERENCE OF MATERIAL SUBMITTED ON A COMPACT DISC - NOT APPLICABLE

### BACKGROUND OF THE INVENTION

### TECHNICAL FIELD OF THE INVENTION

This invention is related generally to video processing devices, and more particularly to an interactive video processing system that operates using video data destined for playback on a video display. [j2]

### DESCRIPTION OF RELATED ART

Movies and other video content are often captured using 35 mm film with a 16:9 aspect ratio. When a movie enters the primary movie market, the 35 mm film is reproduced and distributed to various movie theatres for sale of the movie to movie viewers. For example, movie theatres typically project the movie on a "big-screen" to an audience of paying viewers by sending high lumen light through the 35 mm film. Once a movie has left the "big-screen," the movie often enters a secondary market, in which distribution is accomplished by the sale of video discs or tapes (e.g., VHS tapes, DVD's, high-definition (HD)-DVD's, Blue-ray DVD's, and other recording mediums) containing the movie to individual viewers. Other options for secondary market distribution of the movie include download via the Internet and broadcasting by television network providers.

For distribution via the secondary market, the 35 mm film content is translated film frame by film frame into raw digital video. For HD resolution requiring at least 1920x1080 pixels per film frame, such raw digital video would require about 25 GB of storage for a two-hour movie. To avoid such storage requirements, encoders are typically applied to encode and compress the raw digital video, significantly reducing the storage requirements. Examples of encoding standards include, but are not limited to, Motion Pictures Expert Group (MPEG)-1, MPEG-2, MPEG-2-enhanced for HD, MPEG-4 AVC, H.261, H.263 and Society of Motion Picture and Television Engineers (SMPTE) VC-1.

To accommodate the demand for displaying movies on telephones, personal digital assistants (PDAs) and other handheld devices, compressed digital video data is typically downloaded via the Internet or otherwise uploaded or stored on the handheld device, and the handheld device decompresses and decodes the video data for display to a user on a video display associated with the handheld device. However, the size of such handheld devices typically restricts the size of the video display (screen) on the handheld device. For example, small screens on handheld devices are often sized just over two (2) inches diagonal. By comparison, televisions often have screens with a diagonal measurement of thirty to sixty inches or more. This difference in screen size has a profound affect on the viewer's perceived image quality.

For example, typical, conventional PDA's and high-end telephones have width to height screen ratios of the human eye. On a small screen, the human eye often fails to perceive small details, such as text, facial features and distant objects. For example, in the movie theatre, a viewer of a panoramic scene that contains a distant actor and a roadway sign might easily be able to identify facial expressions and read the sign's text. On an HD television screen, such perception might also be possible. However, when translated to a small screen of a handheld device, perceiving the facial expressions and text often proves impossible due to limitations of the human eye.

Screen resolution is limited if not by technology then by the human eye no matter what the size screen. On a small screen however, such limitations have the greatest impact. For example, typical, conventional PDA's and high-end telephones have width to height screen ratios of 4:3 and are often capable of displaying QVGA video at a resolution of 320x240 pixels. By contrast, HD televisions typically have screen ratios of 16:9 and are capable of displaying resolutions up to 1920x1080 pixels. In the process of converting HD video to fit the far lesser number of pixels of the smaller screen, pixel data is combined and details are effectively lost. An attempt to increase the number of pixels on the smaller screen to that of an HD television might avoid the conversion process, but, as mentioned previously, the human eye will impose its own limitations and details will still be lost.

Video trariscoding and editing systems are typically used to convert video from one format and resolution to another for playback on a particular screen. For example, such systems might input DVD video and, after performing a conversion process, output video that will be played back on a QVGA screen. Interactive editing functionality might also be employed along with the conversion process to produce an edited and converted output video. To support a variety of different screen sizes, resolutions and encoding standards, multiple output video streams or files must be generated.

Further limitations and disadvantages of conventional and traditional approaches will become apparent to one of ordinary skill in the art through comparison of such systems with various aspects of the present invention.[J3]

### BRIEF SUMMARY OF THE INVENTION

The present invention is directed to apparatus and methods of operation that are further described in the following Brief Description of the Drawings, the Detailed Description of the Invention, and the claims.

According to an aspect of the invention, a video processing circuitry is provided; used with a first video display, that processes a sequence of original video frames for use by target video player circuitry, the target video player circuitry being communicatively coupled to a second video display, the first video display having a larger viewing area than that of the second video display, the video processing circuitry comprising:
driver circuitry communicatively coupled to the first video display;
processing circuitry that interacts via the driver circuitry to present at least one frame of the sequence of original video frames on the first video display;
input interface circuitry that delivers signals representing user input to the processing circuitry;
[J5] the processing circuitry responds to the signals representing user input by interacting via the driver circuitry to present a sub-frame on the first video display;
the sub-frame corresponds to a region in the at least one frame of the sequence of original video frames; and the region is identified in the signals representing user input; and
the processing circuitry generates metadata corresponding to the sub-frame to be used by the target video player circuitry in modifying the sequence of original video frames to produce a full screen presentation on the second video display corresponding to the sub-frame.

Advantageously, the processing circuitry includes in the metadata an association of the sub-frame with a plurality of frames of the sequence of original video frames.

Advantageously:
[J6] the processing circuitry responds to additional signals representing user input by interacting via the driver circuitry to present additional sub-frames on the first video display associated with the sequence of original video frames;
the processing circuitry generates additional metadata corresponding to the additional sub-frames that are also to to be used by the target video player circuitry in modifying the sequence of original video frames to produce the full screen presentation on the second video display; and
the metadata and additional metadata generated by the processing circuitry together define a set of sub-frames.

Advantageously, at least two sub-frames of the set of sub-frames correspond to a single frame of the sequence of original video frames.

Advantageously, at least two sub-frames in the set of sub-frames includes an object whose spatial position varies over the sequence of original video frames.

Advantageously, two sub-frames of the set of sub-frames correspond to at least two different frames of the sequence of original video frames.

Advantageously, at least a portion of the set of sub-frames corresponds to a sub-scene of a scene depicted across the sequence of original video frames.

Advantageously, the metadata further includes editing information for use by the target video player circuitry in editing the sub-frame presented on the second video display.

Advantageously, the editing information is identified in the signals representing user input.

Advantageously, the editing information comprises a visual modification to be applied to the portions of the sequence of original video frames associated with the sub-frame.

Advantageously, the editing information comprises motion information to be applied to the sub-frame.

Advantageously, the editing information comprises resizing information to be applied to the sub-frame.

Advantageously, the editing information comprises media to be applied to the sub-frame.

According to an aspect of the invention, a video processing system is provided that receives video data representing a sequence of original video frames, the video processing system comprising:
a user interface that receives user input;
the user input comprising sub-frame information that defines both a first sub-frame corresponding to a first region of interest within at least a first portion of the sequence of original video frames, and a second sub-frame corresponding to a second region of interest within at least a second portion of the sequence of original video frames;
processing circuitry communicatively coupled to the user input; and
the processing circuitry generates, from the sub-frame information, metadata to be used in modifying the video data to produce a full screen presentation of the sequence of original video frames as modified pursuant to the sub-frame information.

Advantageously, the first sub-frame corresponds to a sub-sequence of the sequence of original video data.

Advantageously, in an infrastructure comprising a video player, wherein the metadata generated by the processing circuitry is to be used by the video player to modify the video data pursuant to the sub-frame information.

Advantageously, the sub-frame information further comprises first editing information corresponding to the first sub-frame, and second editing information corresponding to the second sub-frame.

Advantageously, the metadata can be textually displayed and manually edited.

Advantageously, the processing circuitry creates a metadata file containing the metadata, and entries in the metadata file reference at least one frame in the sequence of original video frames.

According to an aspect of the invention, a method is provided associated with a sequence of original video frames that enables display of the sequence of original video frames in a modified form on a first of a plurality of video displays, each of the plurality of video displays having different sizes, the method comprising[J7]:
receiving video data comprising the sequence of original video frames;
presenting at least one frame in the sequence of original video frames on a first video display;
receiving user input identifying a sub-frame corresponding to a region of interest within the at least one frame in the sequence of original video frames; and
generating sub-frame metadata from the user input for later use in modifying the sequence of original video frames to produce the display of the sequence of original video frames in the modified form.

Advantageously, the method further comprises repeating the presentation, receipt of user input, and generation to accommodate a plurality of subframes.

Advantageously, the method further comprises decoding the video data.

Advantageously, the method further comprises receiving additional user input representing editing information associated with the sub-frame.

Advantageously, the editing information comprises a visual modification.

Advantageously, the editing information comprises motion information to be applied to the sub-frame.

Advantageously, the editing information comprises resizing information to be applied to the sub-frame.

Advantageously, the editing information comprises media to be applied to the sub-frame.

Various features and advantages of the present invention will become apparent from the following detailed description of the invention made with reference to the accompanying drawings.

### BRIEF DESCRIPTION OF THE SEVERAL VIEWS OF THE DRAWING(S)

Figure 1 is a schematic block diagram illustrating a video processing system that generates sub-frame metadata for use in modifying a sequence of original video frames for display on video displays of different sizes in accordance with the present invention;
Figure 2 is a schematic block diagram illustrating an exemplary video processing device for generating sub-frame metadata in accordance with the present invention;
Figure 3 is a schematic block diagram illustrating an exemplary operation of the video processing device to generate the sub-frame metadata in accordance with the present invention;
Figure 4 is a diagram illustrating exemplary original video frames and corresponding sub-frames;
Figure 5 is a chart illustrating exemplary sub-frame metadata for a sequence of sub-frames;
Figure 6 is a chart illustrating exemplary sub-frame metadata including editing information for a sub-frame;
Figure 7 is a diagram illustrating an exemplary video processing display providing a graphical user interface that contains video editing tools for editing sub-frames;
Figure 8 is a schematic block diagram illustrating an exemplary video processing device for generating multiple sets of sub-frame metadata;
Figure 9 is a schematic block diagram illustrating an exemplary video processing system for generating multiple sets of sub-frame metadata for multiple target video displays; and
Figure 10 is a logic diagram of an exemplary process for generating sub-frame metadata in accordance with the present invention.

### DETAILED DESCRIPTION OF THE INVENTION

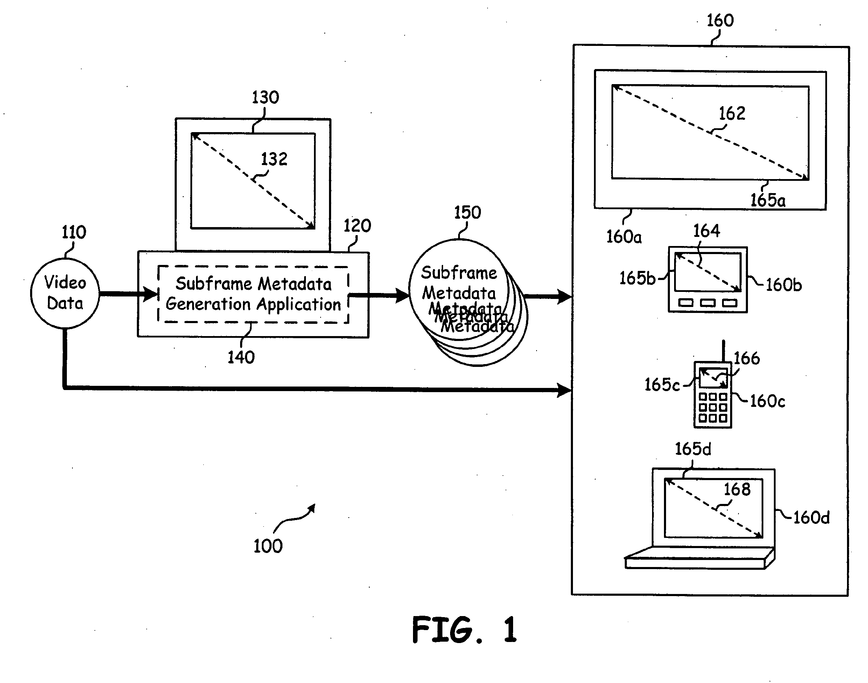

Figure 1 is a schematic block diagram illustrating a video processing system 100 that enables video content to be displayed on displays of different sizes in accordance with the present invention. The video processing system 100 includes a video processing device 120, such as a computer or other device capable of processing video data 110, and a display 130 communicatively coupled to the video processing device 120 to display the video data 110.

The input video data 110 includes video content that is transmitted or stored as a sequence of original video frames containing video content in any format. In one embodiment, the video data 110 is high definition video data, in which each video frame is formed for example of 1920x1080 pixels horizontal by longitudinal in a 16:9 aspect ratio. In another embodiment, the video data 110 is standard or low definition video data, in which each video frame is formed of a certain number of pixels in a 4:3 aspect ratio. For example, if the standard video data is national television system committee (NTSC) video data, each video frame is formed of 720x486 or 720x540 pixels horizontal by longitudinal. As another example; if the standard video data is phase alternation by line (PAL) video data, each video frame is formed of 720x576 pixels horizontal by longitudinal. In addition, the video data 110 may be either encoded and compressed using any coding standard, e.g., MPEG-1, MPEG-2, MPEG-2-enhanced for HD, MPEG-4 AVC, H.261, H.263 and SMPTE VC-1, uncompressed and encoded or uncompressed and not encoded.

The video processing device 120 further implements a sub-frame metadata generation application 140. As used herein, the term "sub-frame metadata generation application" refers to any type of hardware, software and/or firmware necessary for performing the functions of the sub-frame metadata generation application 140 discussed below. In general, the sub-frame metadata generation application 140 takes as input the video data 110 and generates sub-frame metadata 150 from the video data 110 for use in modifying the video data 110 for display on differently sized target video displays 165 of different video display devices 160.

Examples of video display devices 160 include, but are not limited to, a television 160a, a personal digital assistant (PDA) 160b, a cellular telephone 160c and a laptop computer 160d. Each video display device 160a-160d is communicatively coupled to a respective video display 165a-165d, each having a respective size (or viewing area) 162, 165, 166 and 168. The viewing area 162, 164, 166 and 168 of each video display 165a-165d, respectively, is measured diagonally across the respective display 165a-165d. The video displays 165b and 165c of the PDA 160b and cellular telephone 160c, respectively, represent small video displays, while the video displays 165a and 165d of the television 160a and laptop computer 160d represent large video displays. As used herein, the term "small video display" refers to a video display whose viewing area (e.g., 164 and 166) is less than the viewing area 132 of the display 130 associated with the video processing device 120 that generated the sub-frame metadata 150.

In an exemplary operation, the sub-frame metadata generation application 140 is operable to receive the video data 110 from a video source (e.g., a video camera, video disc or video tape), display the video data 110 on the display 130 to a user, receive user input from the user in response to the displayed video data 110 and generate the sub-frame metadata 150 in response to the user input. More particularly, the sub-frame metadata generation application 140 is operable to present at least one frame of the sequence of original video frames in the video data 110 to the user on the display 130, receive as user input sub-frame information identifying a sub-frame corresponding to a region of interest within a scene depicted in the displayed frame(s) and generate the sub-frame metadata 150 from the sub-frame information. As user herein, the term "sub-frame" includes at least a portion of an original video frame, but may include the entire original video frame. The resulting sub-frame metadata 150 defines a sequence of sub-frames that modify the sequence of original video frames (video data 110) in order to produce a full screen presentation of the sub-frames on a target video display 165a-165d.

The sub-frame metadata 150 generated by the sub-frame metadata generation application 140 may include one or more sets of sub-frame metadata 150, each specifically generated for a particular target video display 165a-165d and/or a video display 165a-165d of a particular size 162-168. Thus, for display on a particular video display (e.g., display 165a), each of the video display devices 160 receive and modify the original video data 110 by a received one of the set of sub-frame metadata 150 specifically generated for that video display 165. For example, after receiving both the original video data 110 and one of the sets of sub-frame metadata 150 (i.e., sub-frame metadata set C), the cellular telephone 160c modifies the original video data 110 using the received set of the sub-frame metadata 150 and displays the modified video on its video display, the video display 165c.

In addition, the sub-frame metadata generation application 140 may be further operable to add editing information to the sub-frame metadata 150 for application by a target video display device to the original video data 110. For example, in one embodiment, the editing information is provided by the user as additional user input in response to an interactive display of the original video data 110. The editing information is received by the sub-frame metadata generation application 140 and included as part of the generated sub-frame metadata 150.

Examples of editing information include, but are not limited to, a pan direction and pan rate, a zoom rate, a contrast adjustment, a brightness adjustment, a filter parameter and a video effect parameter. More specifically, associated with a sub-frame, there are several types of editing information that may be applied including those related to: a) visual modification, e.g., brightness, filtering, video effects, contrast and tint adjustments; b) motion information, e.g., panning, acceleration, velocity, direction of sub-frame movement over a sequence of original frames; c) resizing information, e.g., zooming (including zoom in, out and rate) of a sub-frame over a sequence of original frames; and d) supplemental media of any type to be associated, combined or overlaid with those portions of the original video data that falls within the sub-frame (e.g., a text or graphic overlay or supplemental audio.

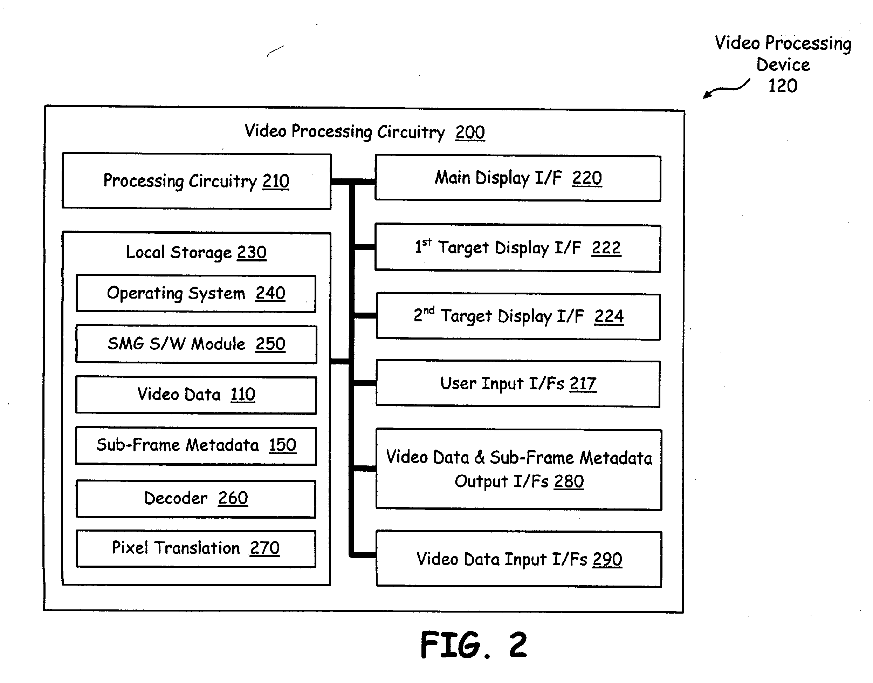

Figure 2 is a schematic block diagram illustrating an exemplary video processing device 120 for generating the sub-frame metadata 150 in accordance with the present invention. The video processing device 120 includes video processing circuitry 200 operable to process video data 110 and to generate the sub-frame metadata 150 from the video data 110. The video processing circuitry 200 includes processing circuitry 210 and local storage 230 communicatively coupled to the processing circuitry 210. The local storage 210 stores, and the processing circuitry 210 executes, operational instructions corresponding to at least some of the functions illustrated herein. For example, in one embodiment, the local storage 210 maintains an operating system 240, a sub-frame metadata generation software module 250, a decoder 260 and a pixel translation module 270.

The sub-frame metadata generation software, module 250 includes instructions executable by the processing circuitry 210 for generating the sub-frame metadata 150 from the video data 110. Thus, the sub-frame metadata generation software module 250 provides instructions to the processing circuitry 210 for retrieving the sequence of original video frames from the video data 110, displaying the original video frames to a user, receiving and processing user input from the user in response to the displayed original video frames and generating the sub-frame metadata 150 in response to the user input.

In embodiments in which the video data 110 is encoded, the decoder 260 includes instructions executable by the processing circuitry 210 to decode the encoded video data to produce decoded video data. For example, in discrete cosine transform (DCT)-based encoding/compression formats (e.g., MPEG-1, MPEG-2, MPEG-2-enhanced for HD, MPEG-4 AVC, H.261 and H.263), motion vectors are used to construct frame or field-based predictions from neighboring frames or fields by taking into account the interframe or inter-field motion that is typically present. As an example, when using an MPEG coding standard, a sequence of original video frames is encoded as a sequence of three different types of frames: "I" frames, "B" frames and "P" frames. "I" frames are intra-coded, while "P" frames and "B" frames are inter-coded. Thus, I-frames are independent, i.e., they can be reconstructed without reference to any other frame, while P-frames and B-frames are dependent, i.e., they depend upon another frame for reconstruction. More specifically, P-frames are forward predicted from the last I-frame or P-frame and B-frames are both forward predicted and backward predicted from the last/next I-frame or P-frame. The sequence of IPB frames is compressed utilizing the DCT to transform NxN blocks of pixel data in an "I", "P" or "B" frame, where N is usually set to 8, into the DCT domain where quantization is more readily performed. Run-length encoding and entropy encoding are then applied to the quantized bitstream to produce a compressed bitstream which has a significantly reduced bit rate than the original uncompressed video data. The decoder 260 decompresses the compressed video data to reproduce the encoded video data, and then decodes the encoded video data to produce the sequence of original video frames (decoded video data).

The decoded video data is provided to the processing circuitry 210 by the sub-frame metadata generation software module 250 for display of the original video frames to the user and generation of the sub-frame metadata 150. For example, in one embodiment, the sub-frame metadata 150 is generated by reference to the original sequence of video frames. In another embodiment, if the video data 110 is encoded using, for example, the MPEG coding standard, in which the original sequence of video frames is encoded as a sequence of "I", "P" and "B" frames, the sub-frame metadata 150 may be generated by reference to the IPB sequence (encoded) sequence of video frames.

The pixel translation module 270 includes instructions executable by the processing circuitry 210 to translate the pixel resolution of the video data 110 to the pixel resolution of the target video display associated with the sub-frame metadata 150. For example, in embodiments in which the pixel resolution of the video data 110 is high definition resolution (e.g., 1920×1080 pixels per frame), and the target video display associated with the sub-frame metadata 150 has a resolution of only 320×240 pixels per frame, the pixel translation module 270 translates the video data 110 from 1920x1080 pixels per frame to 320x240 pixels per frame for proper display on the target video display.

The processing circuitry 210 may be implemented using a shared processing device, individual processing devices, or a plurality of processing devices. Such a processing device may be a microprocessor, micro-controller, digital signal processor, microcomputer, central processing unit, field programmable gate array, programmable logic device, state machine; logic circuitry, analog circuitry, digital circuitry, and/or any device that manipulates signals (analog and/or digital) based on operational instructions. The local storage 230 may be a single memory device or a plurality of memory devices. Such a memory device may be a read-only memory, random access memory, volatile memory, non-volatile memory, static memory, dynamic memory, flash memory, and/or any device that stores digital information. Note that when the processing circuitry 210 implements one or more of its functions via a state machine, analog circuitry, digital circuitry, and/or logic circuitry, the memory storing the corresponding operational instructions is embedded with the circuitry comprising the state machine, analog circuitry, digital circuitry, and/or logic circuitry.

The video processing circuitry 200 further includes a main display interface 220, a first target display interface 222, a second target display interface 224, a user input interface 217, a full-frame video and sub-frame metadata output interface 280 and a full-frame video input interface 290, each communicatively coupled to the local storage 230 and the processing circuitry 210. The main display interface 220 provides an interface to the main display of the video processing device, while the first target display interface 222 and second target display interface 224 each provide a respective interface towards a respective target video display on which the video data 110 as modified by the sub-frame metadata 150 may be displayed. The user input interface(s) 217 provide one or more interfaces for receiving user input via one or more input devices (e.g., mouse, keyboard, etc.) from a user operating the video processing device 120. For example, such user input can include sub-frame information identifying a region of interest (sub-frame) within a scene depicted in the displayed frame(s) and editing information for use in editing the sub-frame information.

The video data and sub-frame metadata output interface(s) 280 provide one or more interfaces for outputting the video data 110 and generated sub-frame metadata 150. For example, the video data and sub-frame metadata output interfaces 280 may include interfaces to storage mediums (e.g., video disc, video tape or other storage media) for storing the video data 110 and sub-frame metadata 150, interfaces to transmission mediums for transmission of the video data 110 and sub-frame metadata 150 (e.g., transmission via the Internet, an Intranet or other network) and/or interfaces to additional processing circuitry to perform further processing on the video data 110 and sub-frame metadata 150. The video data input interface(s) 290 include one or more interfaces for receiving the video data 110 in a compressed or uncompressed format. For example, the video data input interfaces 290 may include interfaces to storage mediums that store the original video data and/or interfaces to transmission mediums for receiving the video data 110 via the Internet, Intranet or other network.

In an exemplary operation, upon initiation of the sub-frame metadata generation software module 250, the sub-frame metadata generation software module 250 provides instructions to the processing circuitry 210 to either receive the video data 110 via video input interface 290 or retrieve previously stored video data 110 from local storage 230. If the video data 110 is encoded, the sub-frame metadata generation software module 250 further provides instructions to the processing circuitry 210 to access the decoder 260 and decode the encoded video data using the instructions provided by the decoder 260.

The sub-frame metadata generation software module 250 then provides instructions to the processing circuitry 210 to retrieve at least one frame in the sequence of original video frames from the video data 110 and display the original video frame(s) to the user via the main display interface 220. In response to receipt of user input identifying a sub-frame corresponding to a region of interest within a scene depicted in the displayed frame(s) via user input interface 217, the sub-frame metadata generation software module 250 then provides instructions to the processing circuitry 210 to generate the sub-frame metadata 150 from the user input, and to store the generated sub-frame metadata 150 in the local storage 230. In embodiments requiring pixel translation, the sub-frame metadata generation software module 250 further instructs the processing circuitry 210 to access the pixel translation module 270 to generate the sub-frame metadata 150 with the appropriate pixel resolution.

Depending on the type(s) of target video displays for which the sub-frame metadata generation software module 250 is programmed for, the sub-frame metadata 150 generated by the sub-frame metadata generation software module 250 may include one or more sets of sub-frame metadata 150, each specifically generated for a particular target video display. For example, in one embodiment, for display on a particular video display (e.g., first target video display), the processing circuitry 210 outputs the original video data 110 and the set of sub-frame metadata 150 for the first target video display via the first target display interface 222. In another embodiment, the processing circuitry 210 outputs the original video data 110 and one or more sets of sub-frame metadata 150 via output interface(s) 280 for subsequent processing, storage or transmission thereof.

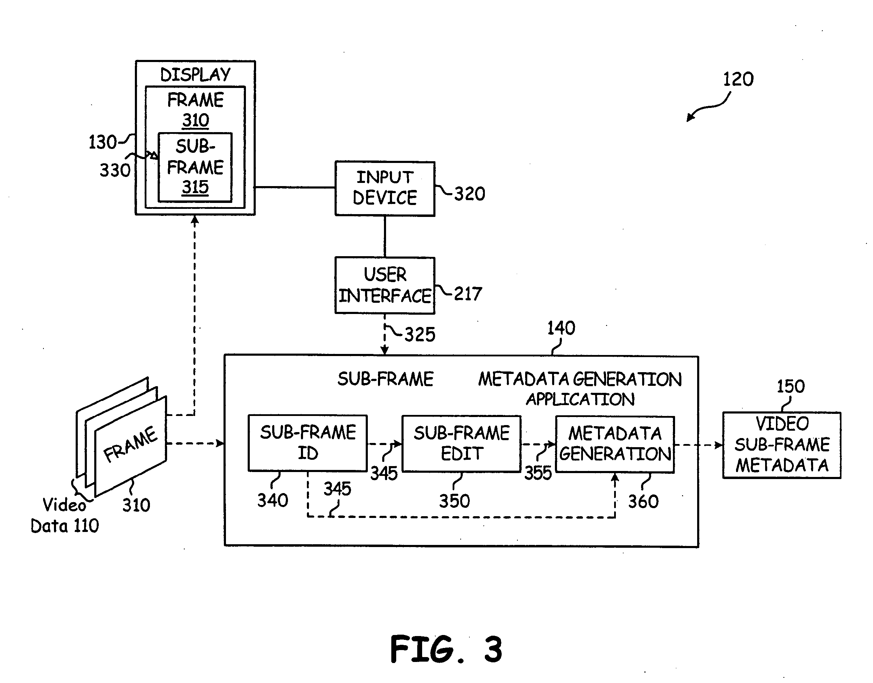

Figure 3 is a schematic block diagram illustrating an exemplary operation of the video processing device 120 to generate the sub-frame metadata 150 in accordance with the present invention. In Figure 3, the video data 110 is represented as a sequence of original video frames 310. Each frame 310 in the sequence of original video frames (video data 110) is input to the sub-frame metadata generation application 140 for generation of the sub-frame metadata 150 therefrom. In addition, each frame 310 in the sequence of original video frames may be displayed on the display 130 of the video processing device 120, as described above in connection with Figure 2, for viewing and manipulation by a user.

For example, a user may operate an input device 320, such as a mouse, to control the position of a cursor 330 on the display 130. The cursor 330 may be used to identify a sub-frame 315 corresponding to a region of interest in the current frame 310 displayed on the display 130. As an example, a user may utilize the cursor 330 to create a window on the display and to control the size and position of the window on the display 130 by performing a series of clicking and dragging operations on the mouse 320. Once the user has created the window on the display 130 using the input device 320, the user may further use the input device 320 to indicate that the window defines a sub-frame 315 by providing user signals 325 to the sub-frame metadata generation application 140 via the user interface 217. From the user signals 325, the sub-frame metadata generation application 140 generates the sub-frame metadata 150. For example, the sub-frame metadata 150 may identify the spatial position of the center of the window on the current frame 310 (e.g., a pixel location on the current frame 310 that corresponds to the center of the window) and a size of the window (e.g., the length and width of the window in numbers of pixels).

The sub-frame metadata generation application 140 includes a sub-frame identification module 340, a sub-frame editing module 350 and a metadata generation module 360. Upon receiving user signals 325 that create a sub-frame 315, the sub-frame identification module 340 assigns a sub-frame identifier 345 to the sub-frame. The sub-frame identifier 345 is used to identify the sub-frame in a sequence of sub-frames defined by the sub-frame metadata 150.

The sub-frame editing module 350 responds to additional user signals 325 that perform editing on the sub-frame. For example, once the user has created the sub-frame 315 using the input device 320, the user can further use the input device 320 to edit the sub-frame 315 and provide user signals 325 characterizing the editing to the sub-frame metadata generation application 140 via the user interface 217. The user signals are input to the sub-frame editing module 350 to generate editing information 355 describing the editing performed on the sub-frame 315. The editing information 355 is included in the sub-frame metadata 150 for use in editing the sub-frame 315 at the target display device prior to display on the target video display. Although editing information might be specified to apply to the entire video data, most editing information applies to a specific one or more sub-frames.

Examples of editing information 355 include, but are not limited to, a pan direction and pan rate, a zoom rate, a contrast adjustment, a brightness adjustment, a filter parameter and a video effect parameter. Examples of video effects include, but are not limited to, wipes, fades, dissolves, surface and object morphing, spotlights and high lights, color and pattern fill, video or graphic overlays, color correction, 3D perspective correction and 3D texture mapping. Another example of a video effect includes "time shifting". A first sequence defined by a first sub-frame might be slowed down upon playback by merely including in the metadata editing information associated with the first sub-frame that directs such a slow down. A second sequence associated with a second sub-frame might receive normal playback, and playback of a third sequence associated with a third sub-frame might be speeded up. Time shifting implementations might include increasing and decreasing frame rates or merely duplicating or discarding selected frames within the original video sequence, or might in a more complex manner combine frames to produce additional frames or reduce the overall number, for example.

The sub-frame identifier 345 assigned by the sub-frame identification module 340, the editing information 355 generated by the sub-frame editing module 350, the current original video frame 310 and user signals 325 defining the size and location of the sub-frame 315 are input to the sub-frame metadata generation module 360 for generation of the sub-frame metadata 150. In general, for each sub-frame 315, the sub-frame metadata 150 includes the sub-frame identifier 345, an identifier of the original video frame 310 from which the sub-frame 315 is taken, the location and size of the sub-frame 315 with respect to the original video frame 310 and any editing information 355 related to the sub-frame 315.

The sub-frame metadata generation module 360 generates the sub-frame metadata 150 for each sub-frame 315, and outputs aggregate sub-frame metadata 150 that defines a sequence of sub-frames 315. The sequence of sub-frames 315 can include one sub-frame 315 for each original video frame 310, multiple sub-frames 315 displayed sequentially for each original video frame 310, multiple sub-frames 315 corresponding to a sub-scene of a scene depicted across a sequence of original video frames 310 or multiple sub-frames 315 for multiple sub-scenes depicted across a sequence of original video frames 310. For example, the sub-frame metadata 150 may include sequencing metadata that both identifies a sequence of sub-scenes and identifies each of the sub-frames 315 associated with each sub-scene in the sequence of sub-scenes.

The sub-frame metadata 150 may further indicate the relative difference in location of the sub-frames 315 within a sub-scene. For example, in one embodiment, the sub-frame metadata 150 may indicate that each sub-frame 315 in the sub-scene is located at the same fixed spatial position on the video display 130 (e.g., each sub-frame 315 includes the same pixel locations). In another embodiment, the sub-frame metadata 150 may indicate that the spatial position of each sub-frame 315 in the sub-scene varies over the sub-frames. For example, each of the sub-frames 315 in the sequence of sub-frames for the sub-scene may include an object whose spatial position varies over the corresponding sequence of original video frames.

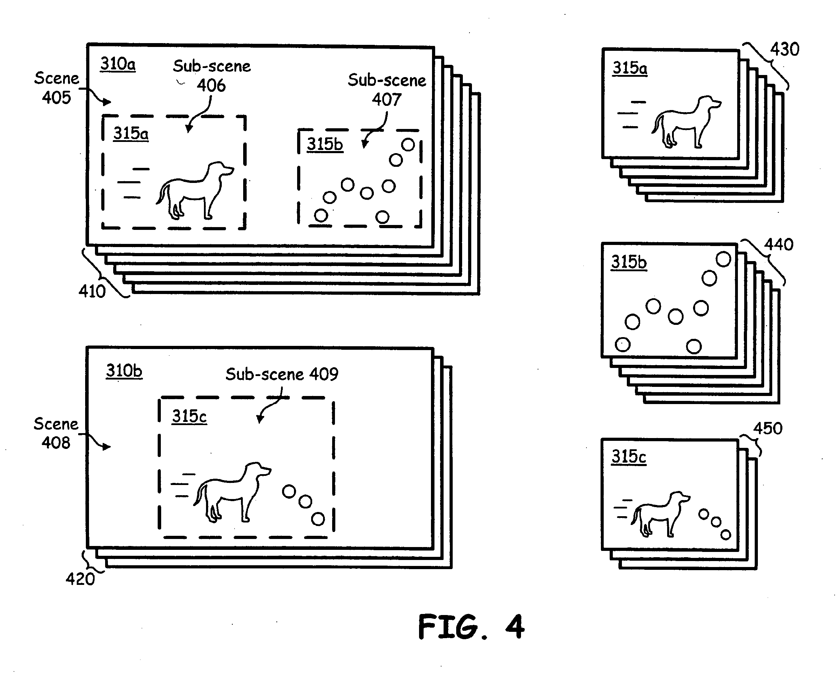

Figure 4 is a diagram illustrating exemplary original video frames 310 and corresponding sub-frames 315. In Figure 4, a first scene 405 is depicted across a first sequence 410 of original video frames 310 and a second scene 408 is depicted across a second sequence 420 of original video frames 310. Thus, each scene 405 and 408 includes a respective sequence 410 and 420 of original video frames 310, and is viewed by sequentially displaying each of the original video frames 310 in the respective sequence 410 and 420 of original video frames 310.

However, to display each of the scenes 405 and 408 on a small video display without reducing the viewer's perceived video quality, each of the scenes 405 and 408 can be divided into sub-scenes that are separately displayed. For example, as shown in Figure 4, within the first scene 405, there are two sub-scenes 406 and 407, and within the second scene 408, there is one sub-scene 409. Just as each scene 405 and 408 may be viewed by sequentially displaying a respective sequence 410 and 420 of original video frames 310, each sub-scene 406, 407 and 409 may also be viewed by displaying a respective sequence of sub-frames 315.

For example, looking at the first frame 310a within the first sequence 410 of original video frames, a user can identify two sub-frames 315a and 315b, each containing video data representing a different sub-scene 406 and 407. Assuming the sub-scenes 406 and 407 continue throughout the first sequence 410 of original video frames 310, the user can further identify two sub-frames 315, one for each sub-scene 406 and 407, in each of the subsequent original video frames 310 in the first sequence 410 of original video frames 310. The result is a first sequence 430 of sub-frames 315a, in which each of the sub-frames 315a in the first sequence 430 of sub-frames 315a contains video content representing sub-scene 406, and a second sequence 440 of sub-frames 315b, in which each of the sub-frames 315b in the second sequence 440 of sub-frames 315b contains video content representing sub-scene 407. Each sequence 430 and 440 of sub-frames 315a and 315b can be sequentially displayed. For example, all sub-frames 315a corresponding to the first sub-scene 406 can be displayed sequentially followed by the sequential display of all sub-frames 315 corresponding to the second sub-scene 407. In this way, the movie retains the logical flow of the scene 405, while allowing a viewer to perceive small details in the scene 405.

Likewise, looking at the first frame 310b within the second sequence 420 of original video frames, a user can identify a sub-frame 315c corresponding to sub-scene 409. Again, assuming the sub-scene 409 continues throughout the second sequence 420 of original video frames 310, the user can further identify the sub-frame 315c containing the sub-scene 409 in each of the subsequent original video frames 310 in the second sequence 420 of original video frames 310. The result is a sequence 450 of sub-frames 315c, in which each of the sub-frames 315c in the sequence 450 of sub-frames 315c contains video content representing sub-scene 409.

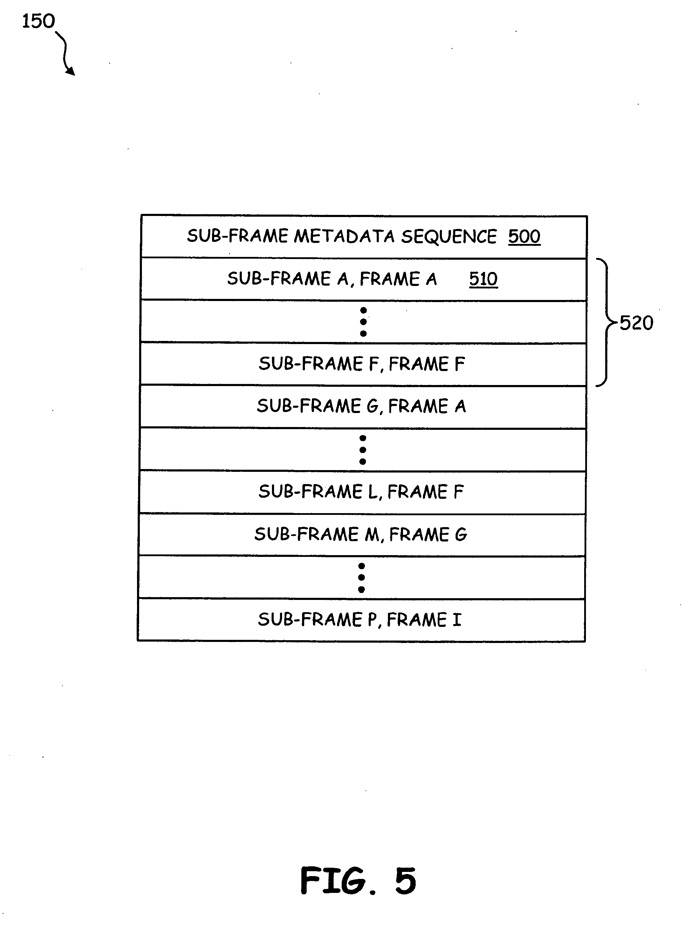

Figure 5 is a chart illustrating exemplary sub-frame metadata 150 for a sequence of sub-frames. Within the sub-frame metadata 150 shown in Figure 5 is sequencing metadata 500 that indicates the sequence (i.e., order of display) of the sub-frames. For example, the sequencing metadata 500 can identify a sequence of sub-scenes and a sequence of sub-frames for each sub-scene. Using the example shown in Figure 4, the sequencing metadata 500 can be divided into groups 520 of sub-frame metadata 150, with each group 520 corresponding to a particular sub-scene.

For example, in the first group 520, the sequencing metadata 500 begins with the first sub-frame (e.g., sub-frame 315a) in the first sequence (e.g., sequence 430) of sub-frames, followed by each additional sub-frame in the first sequence 430. In Figure 5, the first sub-frame in the first sequence is labeled sub-frame A of original video frame A and the last sub-frame in the first sequence is labeled sub-frame F of original video frame F. After the last sub-frame in the first sequence 430, the sequencing metadata 500 continues with the second group 520, which begins with the first sub-frame (e.g., sub-frame 315b) in the second sequence (e.g:, sequence 440) of sub-frames and ends with the last sub-frame in the second sequence 440. In Figure 5, the first sub-frame in the second sequence is labeled sub-frame G of original video frame A and the last sub-frame in the first sequence is labeled sub-frame L of original video frame F. The final group 520 begins with the first sub-frame (e.g., sub-frame 315c) in the third sequence (e.g., sequence 450) of sub-frames and ends with the last sub-frame in the third sequence 450. In Figure 5, the first sub-frame in the first sequence is labeled sub-frame M of original video frame G and the last sub-frame in the first sequence is labeled sub-frame P of original video frame I.

Within each group 520 is the sub-frame metadata for each individual sub-frame in the group 520. For example, the first group 520 includes the sub-frame metadata 150 for each of the sub-frames in the first sequence 430 of sub-frames. In an exemplary embodiment, the sub-frame metadata 150 can be organized as a metadata text file containing a number of entries 510. Each entry 510 in the metadata text file includes the sub-frame metadata 150 for a particular sub-frame. Thus, each entry 510 in the metadata text file includes a sub-frame identifier identifying the particular sub-frame associated with the metadata and references one of the frames in the sequence of original video frames.

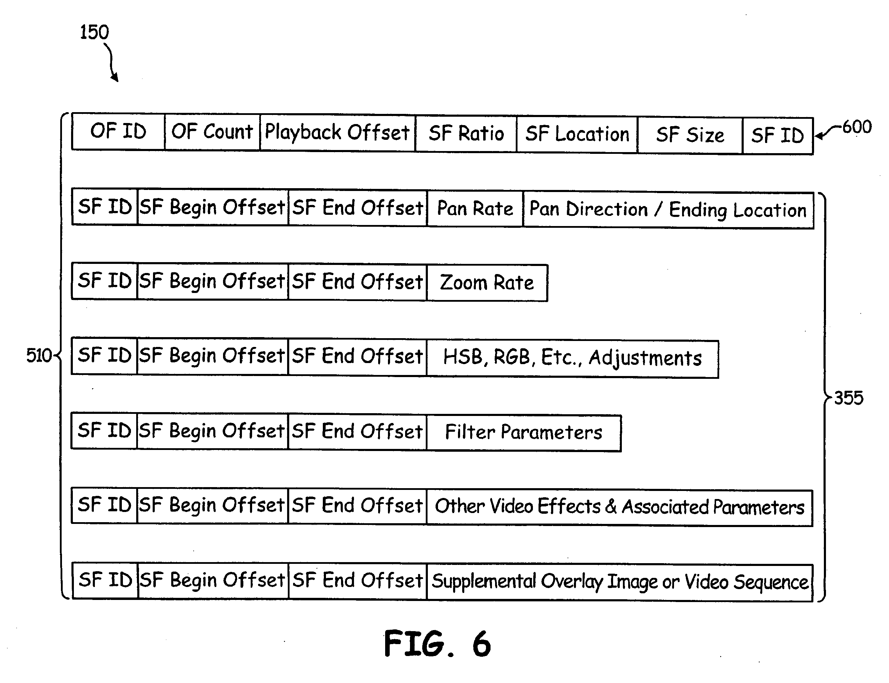

Figure 6 is a chart illustrating exemplary sub-frame metadata 150 for a particular sub-frame. Thus, Figure 6 includes various sub-frame metadata 150 that may be found in an entry 510 of the metadata text file discussed above in connection with Figure 5. The sub-frame metadata 150 for each sub-frame includes general sub-frame information 600, such as the sub-frame identifier (SF ID) assigned to that sub-frame, information associated with the original video frame (OF ID, OF Count, Playback Offset) from which the sub-frame is taken, the sub-frame location and size (SF Location, SF Size) and the aspect ratio (SF Ratio) of the display on which the sub-frame is to be displayed. In addition, as shown in Figure 6, the sub-frame information 150 for a particular sub-frame may include editing information 355 for use in editing the sub-frame. Examples of editing information 355 shown in Figure 6 include a pan direction and pan rate, a zoom rate, a color adjustment, a filter parameter, a supplemental over image or video sequence and other video effects and associated parameters.

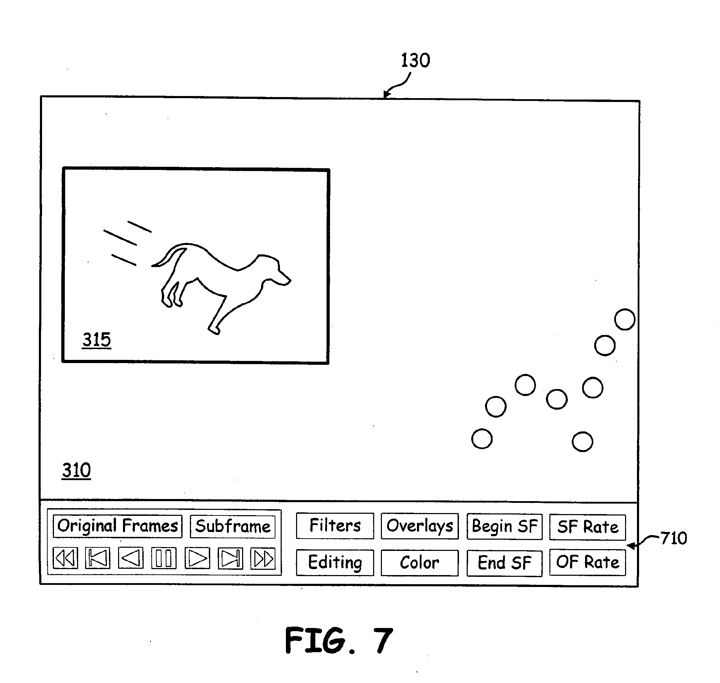

Figure 7 is a diagram illustrating an exemplary video processing display 130 providing a graphical user interface (GUI) 710 that contains video editing tools for editing sub-frames 315. On the video processing display 130 is displayed a current frame 310 and a sub-frame 315 of the current frame 310. The sub-frame 315 includes video data within a region of interest identified by a user, as described above in connection with Figure 3. Once the sub-frame 315 has been identified, the user may edit the sub-frame 315 using one or more video editing tools provided to the user via the GUI 710. For example, as shown in Figure 7, the user may apply filters, color correction, overlays or other editing tools to the sub-frame 315 by clicking on or otherwise selecting one of the editing tools within the GUI 710. In addition, the GUI 710 may further enable the user to move between original frames and/or sub-frames to view and compare the sequence of original sub-frames to the sequence of sub-frames.

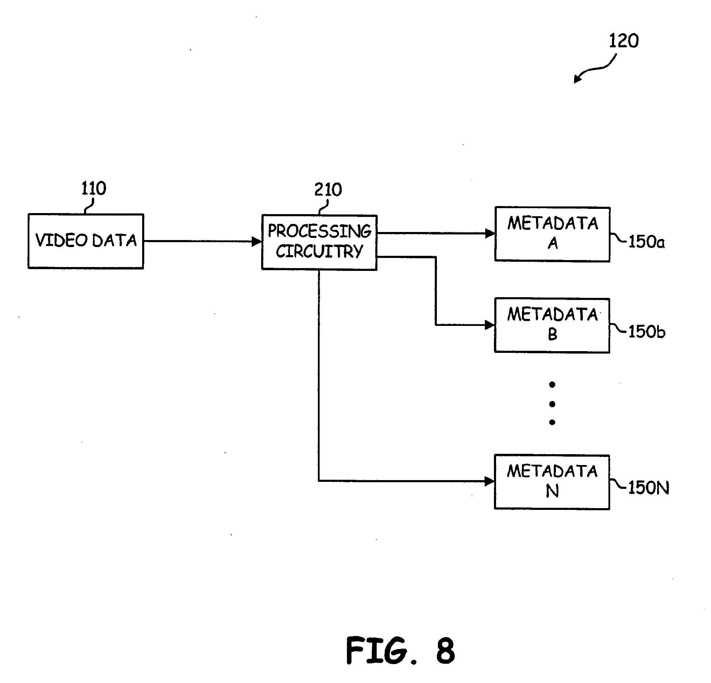

Figure 8 is a schematic block diagram illustrating an exemplary video processing device 120 for generating multiple sets of sub-frame metadata. Depending on the number and type of target video displays for which the video processing device 120 is generating sub-frame metadata, the processing circuitry 210 of the video processing device 120 may produce one or more sets of sub-frame metadata 150a, 150b ... 150N from the original video data 110, in which each set of sub-frame metadata 150a, 150b ... 150N is specifically generated for a particular target video display. For example, in one embodiment, for display on a first target video display, the processing circuitry 210 generates a first set of sub-frame metadata 150a that defines a sequence of sub-frames. The first set of sub-frame metadata 150a is used to modify the original video data 110 to produce a full screen presentation of the sequence of sub-frames on the first target video display.

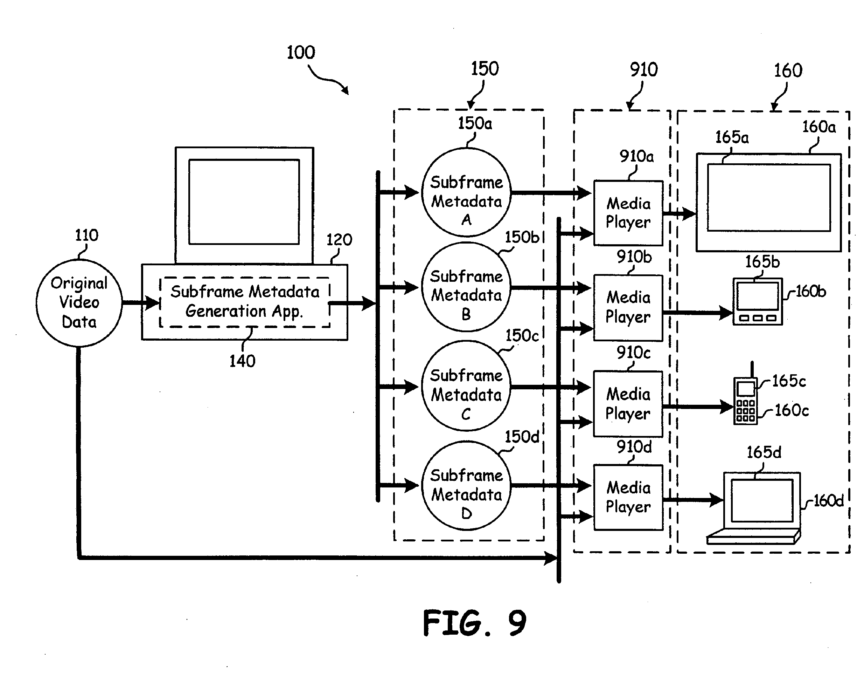

Figure 9 is a schematic block diagram illustrating an exemplary video processing system 100 for generating multiple sets of sub-frame metadata 150 for multiple target video displays 165. As in Figure 1, the video processing system 100 includes the video processing device 120, such as a computer or other device capable of processing video data 110 implementing the sub-frame metadata generation application 140. The sub-frame metadata generation application 140 takes as input the original video data 110 and generates sub-frame metadata 150 that defines a sequence of sub-frames for use in modifying a sequence of original video frames (video data 110) in order to produce a full screen presentation of the sub-frames on a target video display 165 of a video display device 160.

Shown in Figure 9 are the following exemplary video display devices: television 160a, personal digital assistant (PDA) 160b, cellular telephone 160c and laptop computer 160d. Each video display device 160a-160d is communicatively coupled to a respective video display 165a-165d. In addition, each video display device 160a-160d is communicatively coupled to a respective media player 910a-910d. Each media player 910a-910d contains video player circuitry operable to process and display video content on the respective video display 165a-165d. The media player 910 may be included within the video display device 160 or may be communicatively coupled to the video display device 160. For example, media player 910a associated with television 160a may be a VCR, DVD player or other similar device.

As mentioned above in connection with Figure 1, the sub-frame metadata 150 generated by the sub-frame metadata generation application 140 may include one or more sets of sub-frame metadata 150a-150d, each specifically generated for a particular target video display 165a-165d, respectively. For example, as shown in Figure 9, the sub-frame metadata generation application 140 generates four sets of sub-frame metadata 150a-150d, one for each target video display 165a-165d. Thus, for display on a particular video display (e.g., display 165a), the original video data 110 is modified by the set of sub-frame metadata 150a specifically generated for that video display 165a.

In an exemplary operation, each media player 910 is communicatively coupled to receive the original video data 110 containing the sequence of original video frames and a corresponding set of sub-frame metadata 150 defining the sequence of sub-frames. The original video data 110 and set of sub-frame metadata 150 may be received via download through the Internet or another network, broadcasting or uploading from a storage device (e.g., a VHS tape, DVD or other storage medium) communicatively coupled to the media player 910. The media player 910 uses the sub-frame metadata 150 to modify the sequence of original video frames to produce a full screen presentation on the target video display 165 corresponding to the sequence of sub-frames. For example, media player 910a is communicatively coupled to receive the original video data 110 and sub-frame metadata 150a, media player 910b is communicatively coupled to receive the original video data 110 and sub-frame metadata 150b, media player 910c is communicatively coupled to receive the original video data 110 and sub-frame metadata 150c and media player 910d is communicatively coupled to receive the original video data 110 and sub-frame metadata 150d.

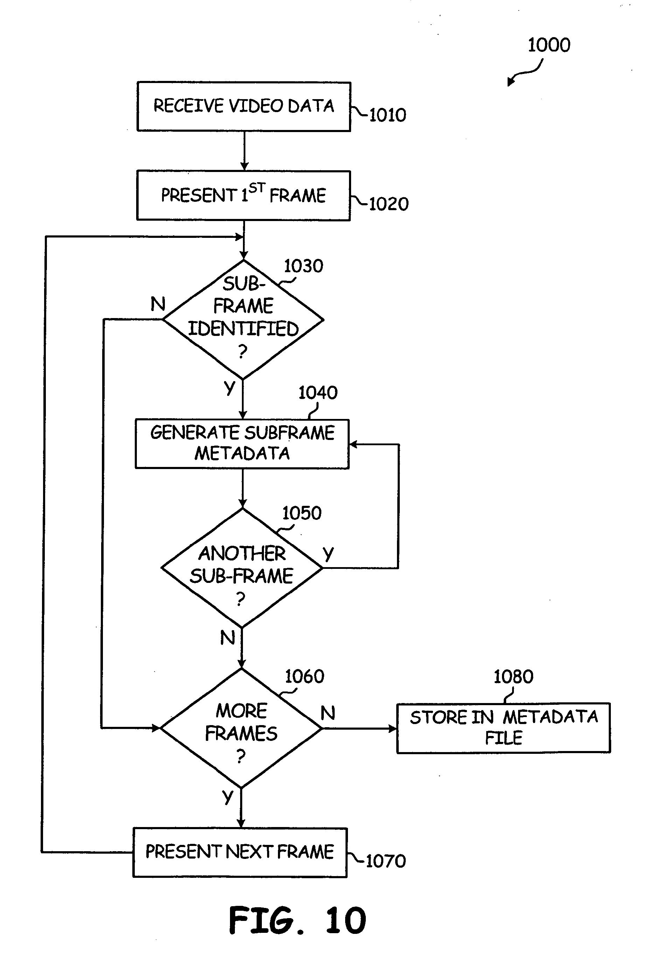

Figure 10 is a logic diagram of an exemplary process 1000 for generating sub-frame metadata in accordance with the present invention. The process begins at step 1010, where original video data containing video content is received from any video source (e.g., video camera, video disc or video tape). The original video data includes a sequence of original video frames containing video content in any format. In addition, the received video data may be encoded and compressed using any coding standard, uncompressed and encoded or uncompressed and not encoded. If the original video data is compressed/encoded, the video data is decompressed and decoded to produce the sequence of original video frames.

The process continues at step 1020, where a first frame in the sequence of original video frames is presented to a user. For example, the first frame can be displayed on a display viewable by a user. The process then continues at decision step 1030, where a determination is made whether a sub-frame of the first frame has been identified. For example; the user can provide user input identifying a sub-frame corresponding to a region of interest within the first frame. If a sub-frame is identified (Y branch of 1030), the process continues to step 1040, where sub-frame metadata for the identified sub-frame is generated. For example, the sub-frame metadata for a particular sub-frame may include an identifier of the sub-frame, an identifier of the original video frame (e.g., first video frame) from which the sub-frame is taken, the location and size of the sub-frame with respect to the original video frame and any editing information for use in editing the sub-frame. This process is repeated at step 1050 for each sub-frame identified in the first frame. Thus, if another sub-frame is identified in the first frame (Y branch of 1050), the process reverts back to step 1040, where sub-frame metadata for the additional sub-frame is generated.

If a sub-frame is not identified in the first frame (N branch of 1030) or there are no more sub-frames identified in the first frame (N branch of 1050), the process continues to decision step 1060, where a determination is made whether there are more frames in the sequence of original video frames. If there are more original video frames (Y branch of 1060), the process continues to step 1070, where the next frame in the sequence of original video frames is presented to the user, and the process is then repeated at step 1030. However, if there are no more original video frames (N branch of 1060), the process continues to step 1080, where the sub-frame metadata generated for each identified sub-frame is stored in a metadata file.

As one of ordinary skill in the art will appreciate, the terms "operably coupled" and "communicatively coupled," as may be used herein, include direct coupling and indirect coupling via another component, element, circuit, or module where, for indirect coupling, the intervening component, element, circuit, or module does not modify the information of a signal but may adjust its current level, voltage level, and/or power level. As one of ordinary skill in the art will also appreciate, inferred coupling (i.e., where one element is coupled to another element by inference) includes direct and indirect coupling between two elements in the same manner as "operably coupled" and "communicatively coupled".

The present invention has also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

The present invention has been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, the present invention is not limited to such embodiments. It will be obvious to one of average skill in the art that various changes and modifications may be practiced within the spirit and scope of the invention, as limited only by the scope of the appended claims. [J8]

## Claims

1. Video processing circuitry, used with a first video display, that processes a sequence of original video frames for use by target video player circuitry, the target video player circuitry being communicatively coupled to a second video display, the first video display having a larger viewing area than that of the second video display, the video processing circuitry comprising:
driver circuitry communicatively coupled to the first video display;
processing circuitry that interacts via the driver circuitry to present at least one frame of the sequence of original video frames on the first video display;
input interface circuitry that delivers signals representing user input to the processing circuitry;
the processing circuitry responds to the signals representing user input by interacting via the driver circuitry to present a sub-frame on the first video display;
the sub-frame corresponds to a region in the at least one frame of the sequence of original video frames, and the region is identified in the signals representing user input; and
the processing circuitry generates metadata corresponding to the sub-frame to be used by the target video player circuitry in modifying the sequence of original video frames to produce a full screen presentation on the second video display corresponding to the sub-frame.

2. The video processing circuitry of Claim 1, wherein the processing circuitry includes in the metadata an association of the sub-frame with a plurality of frames of the sequence of original video frames.

3. The video processing circuitry of Claim 1, wherein:
the processing circuitry responds to additional signals representing user input by interacting via the driver circuitry to present additional sub-frames on the first video display associated with the sequence of original video frames;
the processing circuitry generates additional metadata corresponding to the additional sub-frames that are also to to be used by the target video player circuitry in modifying the sequence of original video frames to produce the full screen presentation on the second video display; and
the metadata and additional metadata generated by the processing circuitry together define a set of sub-frames.

4. The video processing circuitry of Claim 3, wherein at least two sub-frames of the set of sub-frames correspond to a single frame of the sequence of original video frames.

5. The video processing circuitry of Claim 3, wherein at least two sub-frames in the set of sub-frames includes an object whose spatial position varies over the sequence of original video frames.

6. The video processing circuitry of Claim 3, wherein two sub-frames of the set of sub-frames correspond to at least two different frames of the sequence of original video frames.

7. A video processing system that receives video data representing a sequence of original video frames, the video processing system comprising:
a user interface that receives user input;
the user input comprising sub-frame information that defines both a first sub-frame corresponding to a first region of interest within at least a first portion of the sequence of original video frames, and a second sub-frame corresponding to a second region of interest within at least a second portion of the sequence of original video frames;
processing circuitry communicatively coupled to the user input; and the processing circuitry generates, from the sub-frame information, metadata to be used in modifying the video data to produce a full screen presentation of the sequence of original video frames as modified pursuant to the sub-frame information.

8. The video processing system of Claim 7, wherein the first sub-frame corresponds to a sub-sequence of the sequence of original video data.

9. A method associated with a sequence of original video frames that enables display of the sequence of original video frames in a modified form on a first of a plurality of video displays, each of the plurality of video displays having different sizes, the method comprising:
receiving video data comprising the sequence of original video frames;
presenting at least one frame in the sequence of original video frames on a first video display;
receiving user input identifying a sub-frame corresponding to a region of interest within the at least one frame in the sequence of original video frames; and
generating sub-frame metadata from the user input for later use in modifying the sequence of original video frames to produce the display of the sequence of original video frames in the modified form.

10. The method of Claim 9, further comprising repeating the presentation, receipt of user input, and generation to accommodate a plurality of subframes.
